# EUROPÄISCHE PATENTSCHRIFT

(11) **EP 1 827 743 B1**
(45) Veröffentlichungstag und Bekanntmachung des Hinweises auf die Patenterteilung: **23.09.2009**
(21) Anmeldenummer: 05808507.7
(22) Anmeldetag: 02.11.2005
(51) Int. Cl.: B23B 51/10

(54) **ENTGRATWERKZEUG ZUM ENTGRATEN KLEINER BOHRUNGSDURCHMESSER**
DEVICE FOR DEBURRING SMALL-SIZED BORE DIAMETERS
OUTILS D'EBARBAGE POUR EBARBER DES TROUS DE FAIBLE DIAMETRE

(30) Priorität: 13.11.2004 DE 102004054989
(43) Veröffentlichungstag der Anmeldung: 05.09.2007
(73) Patentinhaber: Heule, Ulf, 9436 Balgach (CH)
(72) Erfinder: HEULE, Heinrich, CH-9434 Au (CH)
(74) Vertreter: Riebling, Peter
(86) Internationale Anmeldenummer: PCT/EP2005/011676
(87) Internationale Veröffentlichungsnummer: WO 2006/050841

(56) Entgegenhaltungen:
- WO-A-98/01251
- US-A- 5 209 617
- US-A1- 2004 101 378

## Beschreibung

Die Erfindung betrifft ein Entgratwerkzeug zum Entgraten kleiner Bohrungsdurchmesser nach dem Oberbegriff des Patentanspruches 1.

Mit der auf den gleichen Anmelder zurückgehenden EP 0 850 119 B1 ist ein Entgratwerkzeug zum Entgraten des Bohrungsrandes von Bohrungen bekannt geworden, das für größere Bohrungsdurchmesser geeignet ist. Es hat sich jedoch herausgestellt, dass eine weitere Minimierung des Entgratwerkzeuges zwecks Entgratung kleinerer Bohrungsdurchmesser nicht möglich ist. Ein solches Entgratwerkzeug zum Entgraten von Bohrungsrändern, die beispielsweise einen Durchmesser von 20 mm oder weniger aufweisen, wird insbesondere in der Oralchirurgie, der Chirurgie, der Mikroelektronik und des Miniatur-Maschinenbaus benötigt. Bisher war es nicht möglich, das Entgratwerkzeug nach dem Gegenstand der EP 0 850 119 B1 so stark zu verkleinem, dass die genannten, kleineren Bohrungsdurchmesser zu entgraten waren.

Grund hierfür war, dass bei einer entsprechenden Verkleinerung der Grundkörper im Durchmesser so klein ausgeführt werden muss, dass die in der Mittenlängsbohrung des Grundkörpers angeordneten Elemente (Druckfeder, Steuerbolzen, Schaft) so stark miniaturisiert werden müssen, dass deren Festigkeit nicht mehr ausreicht.

Mit der Druckschrift WO 98/01251 A wird ein Entgratungswerkzeug zum Entgraten des Bohrungsrandes von Bohrungen gemäss dem Oberbegriff von Anspruch 1 offenbart.

Diese Erfindung weist den Nachteil auf, dass aufgrund des relativ großen Durchmessers der Führungshülse am vorderen Ende des Grundkörpers ein Entgraten von Bohrungsrändern von Bohrungsdurchmessern < 20 mm nicht möglich ist.

Mit der Druckschrift US 5,209,617 wird ein Entgratungswerkzeug mit einem verlängerten Gehäuse offenbart, welches zur Aufnahme eines dazwischenliegenden, drehbaren Körpers ausgebildet ist an dessen oberen Ende eine Torsionsfeder angeordnet ist, welche einen Stift an ihrem unteren Ende aufweist, der in Messeraussparungen eingreift und in einem Führungsweg des Werkzeuges gegen die Federspannung bewegt wird, wobei das untere Ende des Gehäuse einen verringerten Durchmesser als das obere Ende aufweist.
Diese Erfindung weist den Nachteil auf, dass der mehrstückige Aufbau des Entgratungswerkzeug mit einem Messergehäuse zur Aufnahme des Stiftes, welches wiederum in einem separaten Werkzeuggehäuse gelagert ist eine Entgratung einer Bohrung oder Ausnehmung mit einen Bohrungsdurchmesser unter 20 mm ausschließt.

Mit der Druckschrift US 2004/0101378 A1 wird ein Verfahren zur Entgratung und ein Werkzeug zur Verwendung hierfür offenbart, worin werkstückeingreifende Teile eines Messers des Werkzeuges das Schneiden von Fasen an Bohrungsrändern von Kernbohrungen verhindern.
Diese Erfindung weist den Nachteil auf, dass das Entgratungswerkzeug mit dem Druckstempel einen relativ großen Werkzeugdurchmesser aufweist, welcher für Bohrungen oder Ausnehmungen mit Durchmessern von zum Beispiel unter 20 mm nicht einsetzbar ist.

Der Erfindung liegt deshalb die Aufgabe zugrunde, ein Entgratwerkzeug der eingangs genannten Art so weiterzubilden, dass es zum Entgraten von Bohrungsdurchmessern kleiner als 20 mm geeignet ist.

Zur Lösung der gestellten Aufgabe ist die Erfindung durch die technische Lehre des Anspruches 1 gekennzeichnet.

Wesentliches Merkmal der Erfindung ist, dass nun der Grundkörper nicht durchgehend bis zum Messer mit relativ gleichbleibendem Durchmesser ausgebildet ist, sondern dass der Grundkörper abgesetzt ist und dass an der vorderen Seite des Grundkörpers eine Aufnahmeöffnung geschaffen ist, in die eine Führungshülse kleineren Durchmessers eingesetzt ist, in der wiederum eine Längsbohrung ausgebildet ist, die als Gleitführung für die dort verschiebbar gelagerte Bolzenspitze des Steuerbolzens dient.

Mit der Idee der Zweiteilung des Grundkörpers, nämlich in einen hinteren Teil des Grundkörpers, der einen relativ großen Durchmesser aufweist und einer im Durchmesser stark verkleinerten Führungshülse, die auswechselbar an der Vorderseite des Grundkörpers angeordnet ist, ergibt sich nun der Vorteil, dass nun auch sehr kleine Bohrungsränder einwandfrei entgratet werden können.

Der Durchmesser der Führungshülse, die auswechselbar in der Längsbohrung des Grundkörpers angeordnet ist, ist demnach entscheidend verkleinert. Dennoch wird eine hohe mechanische Biegefestigkeit und Torsionsstabilität erreicht, weil die in der Führungshülse angeordnete Längsbohrung als Gleitführung für den dort verschiebbar geführten Steuerbolzen ausgebildet ist. Der Steuerbolzen greift also mit einem stiftartigen Fortsatz in diese Längsbohrung, in der sehr stark durchmesser-verkleinerten Längsbohrung in der Führungshülse ein und wirkt dort als Biegestabilisierung.

Der Steuerbolzen wirkt somit Ausbiegungen oder sogar einem Bruch der Führungshülse entgegen, weil er die Führungshülse von innen abstützt, so dass das gesamte Werkzeug - in Bezug auf die Führungshülse, den in der Führungshülse geführten Steuerbolzen und das am vorderen Ende der Führungshülse angeordnete Entgratmesser - entscheidend im Durchmesser verkleinert werden kann.

So ist es erstmals möglich, einen Durchmesser der Führungshülse von z. B. 2 mm zu erreichen, wobei die Länge der Führungshülse etwa 23 mm beträgt und die Länge des im Durchmesser größer ausgebildeten Grundkörpers 40 mm.

Der Grundkörper hat hierbei beispielsweise einen Durchmesser von 8 mm und das gesamte Werkzeug ist dann demzufolge 65 mm lang.

Ein solches Werkzeug kann für die oben genannten miniaturisierten Anwendungsfälle eingesetzt werden, ohne dass ein Bruch der Führungshülse befürchtet werden muss, weil diese von innen durch den dort verschiebbar geführten Steuerbolzen abgestützt wird.

Nach einem weiteren Merkmal der Erfindung ist die Führungshülse auswechselbar in der Längsbohrung des Grundkörpers gehalten und weist dort einen Führungsbund vergrößerten Durchmessers auf, der in der Längsbohrung vergrößerten Durchmessers im Grundkörper eingreift und dort beispielsweise mit einer Klemmschraube gehalten ist.

In einer anderen Ausgestaltung ist es möglich, den Führungsbund der Führungshülse mit einem Außengewinde zu versehen und in der Längsbohrung des Grundkörpers ein Innengewinde anzuordnen, um die beiden Teile über eine Schraubverbindung miteinander zu verbinden.

Mit der Anordnung einer auswechselbaren Führungshülse besteht der Vorteil, dass die Herstellung eines solchen Entgratwerkzeuges nun wesentlich kostengünstiger ist, weil es zwei-teilig ausgebildet ist und die Führungshülse in ihrem vorderen Bereich im Durchmesser sehr dünn ausgeführt werden kann.

In einer weiteren Ausführungsform ist vorgesehen, dass die Führungshülse zwar zentrisch zur Mittenlängsbohrung des Grundkörpers in diesen eingesetzt ist, im Innenraum der Führungshülse jedoch eine exzentrisch zur Längsmittenbohrung des Grundkörpers angeordnete Längsbohrung angeordnet ist, in welcher der Steuerbolzen verschiebbar geführt ist.

Das Messer muss hierzu mit seinen Schneidkanten immer gleich weit aus der Öffnung der Querausnehmung im vorderen Bereich der Führungshülse herausstehen. Verwendet man nun einen im Durchmesser größeren Messerhalter und will man diesen mit dem gleichen Messer verwenden, dann genügt es, dieses Messer wiederum an die Stelle einzuschieben und der exzentrische, federbelastete Steuerbolzen wird nun wieder an der gleichen Stelle in das Messer eingreifen, so dass dieses unabhängig von dem Durchmesser des Messerhalters immer stets gleich weit aus dem Messerhalter heraussteht.

Wird also der Durchmesser von dem einen Werkzeug auf das andere um 10 mm vergrößert, dann wird auch die Exzentrizität der exzentrischen Längsmittenbohrung um 5 mm nach außen versetzt, um so wieder dafür zu sorgen, dass das gleiche Messer aus dem - im Durchmesser nun größeren - Messerhalter gleichweit heraussteht und eine gleiche Schneidaktion durchführt.

Damit besteht der Vorteil, dass man ein und das gleiche Messer im gewissen Umfang für unterschiedliche Durchmesser von Werkzeughaltern verwenden kann und die Lagerhaltung von Messern hierdurch stark minimiert wird.

Es ist auch denkbar, dass die Grundkörperbohrung exzentrisch ausgebildet ist und die Bohrung der Führungshülse in dessen Zentrum ist. Es werden nun die beiden Teile zusammengesetzt und es entsteht die gleiche Exzentrizität, wie oben beschrieben.

Wegen der übrigen Funktion des Entgratwerkzeuges wird auf die Offenbarung in der EP 0 850 119 B1 verwiesen.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch ein Entgratwerkzeug in einer ersten Ausführungsform
- Figur 2:: Schnitt gemäß der Linie A-A in Figur 1
- Figur 3:: Schnitt durch ein Entgratwerkzeug nach dem Stand der Technik mit zentrisch angelegter Mittenbohrung
- Figur 4:: Schnitt durch ein Entgratwerkzeug nach dem Stand der Technik gemäß Figur 3 mit exzentrisch angelegter Mittenbohrung für die Führungshülse

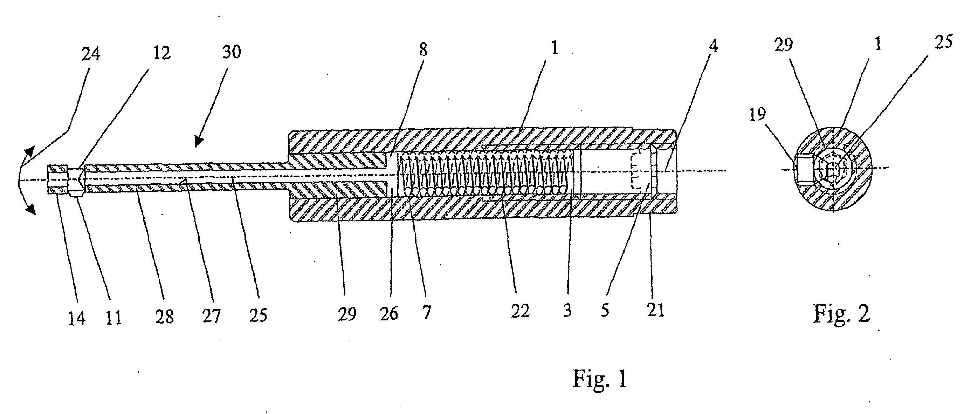

In Figur 1 ist der Grundkörper eines Entgratwerkzeuges dargestellt, der auch als Messerhalter bezeichnet ist. Im Grundkörper 1 ist eine zentrische, durchgehende Längsbohrung 3 angeordnet, deren hinterer Teil mit einem Innengewinde 22 versehen ist. In die Längsbohrung 3 ist eine Druckfeder 7 eingesetzt, wobei sich diese an ihrer Rückseite an einem Gewindestift abstützt, der mittels eines geeigneten Werkzeuges im Innengewinde 22 einschraubbar ist.
Durch die Einstellung des Gewindestiftes 5 kann somit die Federhärte der Druckfeder 7 eingestellt werden.

Zentrisch zur Mittenachse 4 der Längsbohrung 3 ist im vorderen Bereich eine Führungshülse 30 vorgesehen, die aus einem abgestuften Teil besteht.

Der Führungsbund 29 größeren Durchmessers ist in die Längsbohrung 3 eingepasst und wird dort gemäß Figur 2 mittels einer Klemmschraube 19 befestigt.

Der Führungsbund 29 vergrößerten Durchmessers geht an seiner Vorderseite in einen Führungshals 28 verringerten Durchmessers über, der beispielsweise lediglich einen Durchmesser von nur noch 2 mm aufweist.

Im Führungshals 28 ist eine sehr kleine Längsbohrung 27 angelegt, in deren Bereich die Bolzenspitze 25 eines Steuerbolzens 8 verschiebbar geführt ist. Die Bolzenspitze 25 durchgreift den Führungsbund 29 an seinem hinteren Ende und ist dort mit einem Druckstück 26 vergrößerten Durchmessers verbunden, welches verschiebbar in der Längsbohrung 3 aufgenommen ist. An diesem Druckstück 26 legt sich das andere Ende der Druckfeder 6 an.

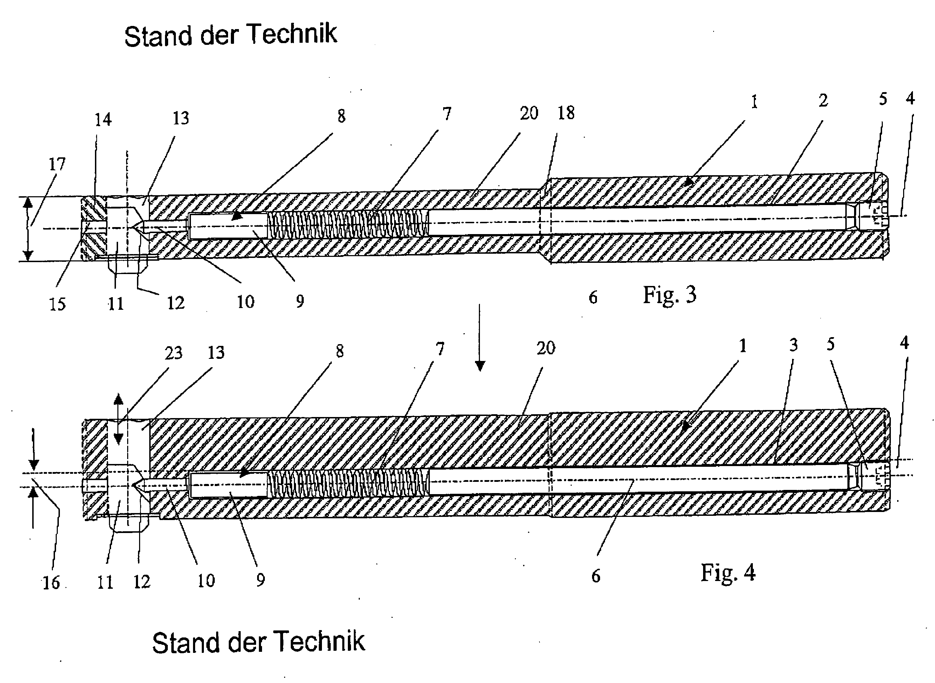

Die Bolzenspitze 25 des Steuerbolzens 8 greift in eine zugeordnete Steuerausnehmung 12 an dem am vorderen Teil angeordneten Messer 11 an, welches in Verschieberichtung 23 (siehe Figur 4) verschiebbar in einer Querausnehmung 13 (siehe Figur 3 und 4) am vorderen Ende der Führungshülse 30 gehalten ist.

Wird dem gemäß die Führungshülse 30 beispielsweise in den Pfeilrichtungen 24 auf Biegung belastet, stützt die Bolzenspitze 25 in der Längsbohrung 27 die Führungshülse 30 ab und verhindert einen Bruch derselben.

Die Führungshülse 30 ist im Übrigen leicht auswechselbar im Grundkörper 1 mit der vorher erwähnten Klemmschraube 19 gehalten.

Am hinteren Ende des Grundkörpers 1 ist im Übrigen noch ein Gewindeansatz 21 in Form eines Außengewindes angeordnet, so dass der gesamte Grundkörper 1 auch auf ein anderes geeignetes Haltewerkzeug aufgeschraubt werden kann.

Aus den Figuren 3 und 4 gehen weitgehend aus dem Stand der Technik bekannte Einzelheiten hervor.

Für die gleichen Teile gelten die gleichen Bezugszeichen, wie anhand der Figuren 1 und 2 erläutert wurde.

Im Unterschied zum Ausführungsbeispiel nach Figur 1 wirkt auf das rechte Ende der Druckfeder 7 eine Druckstange 6, die an ihrem hinteren freien Ende mit dem Gewindestift 5 eingestellt werden kann.

Der Steuerbolzen 8 ist relativ kurz ausgebildet und besteht aus den Bolzenteilen 9 vergrößerten Durchmessers, die dadurch eine relativ kurze Bolzenspitze 10 sich nach vorne fortsetzt, deren vorderes freies Ende in die Steuerausnehmung 12 des Messers 11 eingreift.

Nach Figur 3 ist die Längsbohrung 2 koaxial zur Mittenlängsachse des Steuerbolzens 8 ausgebildet.

Nach Figur 4 ist jedoch die Längsbohrung 3 exzentrisch um den Exzenterversatz 16 zur Mittenlängsachse 4 ausgebildet. Dies führt dazu, dass bei gleichbleibendem Außendurchmesser der Führungshülse 20 die Bolzenspitze 10 an einer um den Exzenterversatz 16 nach unten versetzten Stelle in die Steuerausnehmung 12 des Messers 11 eingreift.

Das Messer ist somit in den Verschieberichtungen 23 verschiebbar in der Querausnehmung 13 gehalten und hat einen relativ großen Verschiebeweg.

Somit kann das gleiche Messer wie bei Figur 3 für ein Werkzeug nach Figur 4 für einen größeren Entgratdurchmesser verwendet werden.
Der Durchmesser 17 der Führungshülse im Ausführungsbeispiel nach Figur 3 kann beispielsweise 7,8 mm betragen, während der Durchmesser 17 nach Figur 4 etwa 11,6 mm betragen kann.

In Figur 3 ist noch gezeigt, dass der Grundkörper 1 einen Absatz 18 bildet, um so in eine im Durchmesser verkleinerte Führungshülse 20 überzugehen.

Die Führungshülse 20 ist jedoch nicht auswechselbar ausgebildet, wie dies - im Gegensatz - in Figur 1 dargestellt ist.

### Zeichnungslectende

- 1.: Grundkörper
- 2.: Längsbohrung
- 3.: Längsbohrung
- 4.: Mittenachse
- 5.: Gewindestift
- 6.: Druckstange
- 7.: Druckfeder
- 8.: Steuerbolzen
- 9.: Bolzenteil
- 10.: Bolzenspitze
- 11.: Messer
- 12.: Steuerausnehmung
- 13.: Querausnehmung
- 14.: Vorderteil
- 15.: Bohrung
- 16.: Exzenterversatz
- 17.: Durchmesser
- 18.: Absatz
- 19.: Klemmschraube
- 20.: Führungshülse
- 21.: Gewindeansatz
- 22.: Innengewinde
- 23.: Verschieberichtung
- 24.: Pfeilrichtungen
- 25.: Bolzenspitze
- 26.: Druckstück
- 27.: Längsbohrung
- 28.: Führungshals
- 29.: Führungsbund
- 30.: Führungshülse

## Patentansprüche

1. Entgratwerkzeug zum Entgraten des Bohrungsrandes von Bohrungen mit einem Grundkörper (1), in dem mindestens eine quer zur Längsachse des Grundkörpers gerichtete Ausnehmung (13) angeordnet ist, in welcher mindestens ein Messer (11) in Längsrichtung der Ausnehmung (13) federbelastet verschiebbar angeordnet ist, und in einer Längsbohrung (3) des Grundkörpers (1) eine Druckfeder (7) angeordnet ist, die sich an das eine Ende eines Steuerbolzens (8) anlegt, welcher aus einem in der Längsbohrung (3) des Grundkörpers (1) verschiebbaren Druckstück (26) gebildet ist, an dessen Vorderseite die Bolzenspitze (25) mit stark vermindertem Durchmesser ansetzt und dessen anderes Ende in einer im Messer (11) angeordneten Steuerausnehmung (12) eingreift, welche dem Messer (11) in Verschieberichtung (23') eine Haltekraft zuordnet, wobei zum Entgraten von Bohrungsdurchmessern <20 mm der Grundkörper (1) an seiner Vorderseite in eine Führungshülse (30) kleineren Durchmessers übergeht, in der eine als Gleitführung ausgebildete Längsbohrung (27) zur Führung der dort verschiebbar gelagerten Bolzenspitze (25) des Steuerbolzens (8) angeordnet ist, **dadurch gekennzeichnet, dass** die Führungshülse (30) aus einem Führungsbund (29) größeren Durchmessers besteht, der auswechselbar in der Längsbohrung des Grundkörpers (1) aufgenommen ist, und wobei der Führungsbund (29) der Führungshülse (30) in einen durchmesser-verkleinerten Führungshals (28) übergeht, in dem der Steuerbolzen (8) in einer Gleitführung verschiebbar geführt ist.

2. Entgratwerkzeug nach Anspruch 1, **dadurch gekennzeichnet, dass** sich die Führungshülse (30) koaxial und fluchtend zur Längsbohrung (3) im Grundkörper fortsetzt.

3. Entgratwerkzeug nach Anspruch 1 oder 2, **dadurch gekennzeichnet, dass** sich die Längsachse der Führungshülse (30) exzentrisch zu der Mittenachse (4) der Längsbohrung (3) im Grundkörper (1) fortsetzt.

4. Entgratwerkzeug nach einem der Ansprüche 1 bis 3, **dadurch gekennzeichnet, dass** die Druckfeder (7) eine Schraubendruckfeder ist.

5. Entgratwerkzeug nach einem der Ansprüche 1 bis 4, **dadurch gekennzeichnet, dass** die Druckfeder (7) eine Schenkelfeder ist.

6. Entgratwerkzeug nach einem der Ansprüche 1 bis 5, **dadurch gekennzeichnet, dass** die Druckfeder (7) eine Spiralfeder ist.

7. Entgratwerkzeug nach einem der Ansprüche 1 bis 6, **dadurch gekennzeichnet, dass** die Steuerausnehmung (12) im Messer (11) aus einem Radius besteht, von dem aus sich eine erste Gerade schräg zur Mittellinie des Steuerbolzens (8) erstreckt, an welche sich eine zweite Gerade anschließt, welche eine flachere Steigung als die erste Gerade aufweist.

8. Entgratwerkzeug nach Anspruch 7, **dadurch gekennzeichnet, dass** der Radius seitlich zur Mittellinie des Steuerbolzens (8) versetzt in der Steuerausnehmung (12) angeordnet ist.

## Claims

1. Deburring tool for deburring the bore edge of bores with a base body (1), in which at least one recess (13) directed transversely to the longitudinal axis of the base body is arranged, in which recess at least one blade (11) is displaceably arranged in a spring-loaded manner in the longitudinal direction of the recess (13), and arranged in a longitudinal bore (3) of the base body (1) is a compression spring (7), which rests on one end of a control bolt (8), which is formed from a compression piece (26), which can be displaced in the longitudinal bore (3) of the base body (1), on the leading side of which the bolt tip (25) is placed with a sharply reduced diameter and the other end of which engages in a control recess (12) which is arranged in the blade (11) and assigns a holding force to the blade (11) in the displacement direction (23'), wherein to deburr bore diameters of < 20 mm, the base body (1) at its leading side passes into a guide sleeve (30) with a smaller diameter, in which a longitudinal bore (27) configured as a sliding guide is arranged to guide the bolt tip (25) of the control bolt (8) displaceably mounted there, **characterised in that** the guide sleeve (30) consists of a guide collar (29) with a relatively large diameter, which is replaceably received in the longitudinal bore of the base body (1), and wherein the guide collar (29) of the guide sleeve (30) passes into a guide neck (28) of reduced diameter, in which the control bolt (8) is displaceably guided in a sliding guide.

2. Deburring tool according to claim 1, **characterised in that** the guide sleeve (30) is continued coaxially and aligned with the longitudinal bore (3) in the base body.

3. Deburring tool according to claim 1 or 2, **characterised in that** the longitudinal axis of the guide sleeve (30) is continued eccentrically with respect to the centre axis (4) of the longitudinal bore (3) in the base body (1).

4. Deburring tool according to any one of claims 1 to 3, **characterised in that** the compression spring (7) is a helical compression spring.

5. Deburring tool according to any one of claims 1 to 4, **characterised in that** the compression spring (7) is a leg spring.

6. Deburring tool according to any one of claims 1 to 5, **characterised in that** the compression spring (7) is a flat spiral spring.

7. Deburring tool according to any one of claims 1 to 6, **characterised in that** the control recess (12) in the blade (11) consists of a radius, from which a first straight line extends obliquely with respect to the centre line of the control bolt (8), adjoined by a second straight line, which has a flatter gradient than the first straight line.

8. Deburring tool according to claim 7, **characterised in that** the radius is arranged laterally offset with respect to the centre line of the control bolt (8) in the control recess (12).

## Revendications

1. Outil d'ébarbage pour ébarber le bord de perçages, avec un corps de base (1) dans lequel est disposée au moins une cavité (13) qui est dirigée transversalement par rapport à l'axe longitudinal du corps de base et dans laquelle au moins une lame (11) est disposée de manière à être mobile, par ressort, dans le sens longitudinal de la cavité (13), étant précisé qu'il est prévu dans un perçage longitudinal (3) du corps de base (1) un ressort de compression (7) qui s'applique contre une extrémité d'une tige de commande (8) composée d'une pièce de pression (26) qui est mobile dans le perçage longitudinal (3) du corps de base (1) et sur la face avant de laquelle est rapportée la pointe de tige (25) à diamètre réduit, l'autre extrémité de la tige de commande (8) entrant dans une cavité de commande (12) qui est disposée dans la lame (11) et qui donne à la lame (11) une résistance dans le sens de déplacement (23), étant précisé que pour l'ébarbage de diamètres de perçages <20 mm le corps de base (1) se prolonge au niveau de sa face avant par un manchon de guidage (30) de plus petit diamètre dans lequel est prévu un perçage longitudinal (27), conçu comme une coulisse, pour le guidage de la pointe (25) montée mobile de la tige de commande (8),
**caractérisé en ce que** le manchon de guidage (30) se compose d'une collerette de guidage (29) de plus grand diamètre qui est logée dans le perçage longitudinal du corps de base (1) de manière à pouvoir être changée, et la collerette de guidage (29) du manchon de guidage (30) se prolonge par un collet de guidage (28) de diamètre réduit dans lequel la tige de commande (8) est guidée mobile dans une coulisse.

2. Outil d'ébarbage selon la revendication 1, **caractérisé en ce que** le manchon de guidage (30) se prolonge dans le corps de base coaxialement par rapport au perçage longitudinal (3) et dans l'alignement de celui-ci.

3. Outil d'ébarbage selon la revendication 1 ou 2, **caractérisé en ce que** l'axe longitudinal de la gaine de guidage (30) se prolonge de manière excentrique par rapport à l'axe médian (4) du perçage longitudinal (3) dans le corps de base (1).

4. Outil d'ébarbage selon l'une des revendications 1 à 3, **caractérisé en ce que** le ressort de compression (7) est un ressort hélicoïdal de compression.

5. Outil d'ébarbage selon l'une des revendications 1 à 4, **caractérisé en ce que** le ressort de compression (7) est un ressort à branches.

6. Outil d'ébarbage selon l'une des revendications 1 à 5, **caractérisé en ce que** le ressort de compression (7) est un ressort à boudin.

7. Outil d'ébarbage selon l'une des revendications 1 à 6, **caractérisé en ce que** la cavité de commande (12) prévue dans la lame (11) se compose d'un rayon à partir duquel s'étend une première droite, inclinée par rapport à l'axe médian de la tige de commande (8), à laquelle fait suite une seconde droite présentant une inclinaison moins forte que la première.

8. Outil d'ébarbage selon la revendication 7, **caractérisé en ce que** le rayon est prévu dans la cavité de commande (12) en étant décalé latéralement par rapport à l'axe médian de la tige de commande (8).
